(19) Europäisches Patentamt
European Patent Office
Office européen des brevets

(11) Veröffentlichungsnummer: **0 615 778 A1**

# (12) EUROPÄISCHE PATENTANMELDUNG

(21) Anmeldenummer: **94101003.5**

(22) Anmeldetag: **25.01.94**

(51) Int. Cl.[5]: **B01D 67/00**

(30) Priorität: **19.03.93 DE 4308807**

(43) Veröffentlichungstag der Anmeldung: **21.09.94 Patentblatt 94/38**

(84) Benannte Vertragsstaaten: **BE CH DK ES FR GB IT LI NL SE**

(71) Anmelder: **GAMBRO DIALYSATOREN GMBH & CO. KG**
**Holger-Crafoord-Strasse 26**
**D-72379 Hechingen (DE)**

(72) Erfinder: **Bell, Carl-Martin**
**Wielandstrasse 8**
**DE-72379 Hechingen (DE)**
Erfinder: **Pirner, Manfred**
**Graf-Friedrich-Weg 35**
**DE-72379 Hechingen (DE)**
Erfinder: **Buck, Reinhold Johann Dipl.-Ing.FH**
**Kirchenstrasse 24**
**DE-88422 Alleshausen (DE)**
Erfinder: **Göhl, Hermann Joseph Dipl.-Ing.**
**Ganswiese 8**
**DE-72406 Bisingen (DE)**

(74) Vertreter: **Weber, Dieter, Dr. et al**
**Weber, Dieter, Dr.,**
**Seiffert, Klaus, Dipl.-Phys.,**
**Lieke, Winfried, Dr.**
**Postfach 61 45**
**D-65051 Wiesbaden (DE)**

## (54) Verfahren zur Herstellung hydrophiler Membranen.

(57) Ein Verfahren zur Herstellung hydrophiler Membranen unter Verwendung wenigstens eines hydrophoben Polymers und von Polyvinylpyrrolidon als hydrophiles Polymer, membranbildender Formgebung der Polymeren und Immobilisierung des Polyvinylpyrrolidons ist dadurch gekennzeichnet, daß man das Polyvinylpyrrolidon auf und/oder in der Membran durch Behandlung mit einer wäßrigen Peroxodisulfatlösung in der Wärme immobilisiert. Die Membranen werden für die Hämodialyse, Hämodiafiltration oder Hämofiltration von Blut verwendet.

EP 0 615 778 A1

Aus verschiedenen Literaturstellen, wie den US-Patentschriften Nr. 3 615 024 und 3 691 068 sowie der DE-OS 2 917 357, sind Hohlfasern und Membranen aus einem hydrophoben Polymer bekannt. Solche Membranen, die für Hämodialyse, Hämodiafiltration und Hämofiltration von Blut einsetzbar sein sollen, sind in trockenem Zustand mit Wasser nicht benetzbar, so daß sie entweder nicht vollständig getrocknet werden dürfen oder mit einer hydrophilen Flüssigkeit, wie Glycerin, gefüllt werden müssen.

Um diesen Nachteil zu beseitigen und die Benetzbarkeit, Blutverträglichkeit und diffusive Permeabilität zu verbessern, ist es beispielsweise aus den europäischen Offenlegungsschriften Nr. 0 082 433, 0 168 783 und 0 305 787 bekannt, die hydrophoben Polymere in der Membran mit hydrophilen Polymeren zu kombinieren. Als hydrophobe Polymere werden dabei beispielsweise Polysulfone, Polyethersulfone, Polycarbonate, Polyaramide, Polyamide, Polyvinylchlorid, modifizierte Acrylsäure, Polyether, Polyurethane, Polyacrylnitril, Polypropylen, Polyetherimide und Copolymere hiervon verwendet. Als hydrophile Polymere setzt man gemäß den genannten Patentschriften Polyvinylpyrrolidon, Polyethylenglycol, Polyglycolmonoester, Copolymere von Polyethylenglycol mit Polypropylenglycol, Cellulosederivate, Polysorbat und Polyethylen-Polypropylenoxidcopolymem ein. Bevorzugt wird als hydrophiles Polymer Polyvinylpyrrolidon benutzt.

Derartige Membranen haben gegenüber hydrophoben Membranen den Vorteil verbesserter Benetzbarkeit mit wäßrigen Lösungen, erhöhter Blutverträglichkeit und gesteigerter diffusiver Permeabilitäten. Es besteht aber das Problem, daß solche Membranen bei der Nachbearbeitung und Verwendung nach und nach Anteile der hydrophilen Polymerkomponente abgeben, was einerseits zu einem Verlust der hydrophilen Eigenschaften führt und andererseits bei medizinischer Anwendung in vivo zur Ansammlung der hydrophilen Komponente, Insbesondere Polyvinylpyrrolidon, im Gewebe der Patienten führt.

Um diesen Nachteil hydrophiler Membranen zu beseitigen, immobilislert das Verfahren der EP-OS 0 261 734 das hydrophile Polymer, wie Polyvinylpyrrolidon, durch Vernetzung unter Hitzebehandlung. Bekannt ist auch die Vernetzung von Polyvinylpyrrolidon unter Gelbildung, beispielsweise durch Bestrahlung mit gamma-Strahlen. Hierzu wird beispielsweise auf "Macromol. Sci. Phys.", B 7 (2), Seiten 209 bis 224 (1973) hingewiesen. Bekannt ist auch eine Vernetzung durch UV-Bestrahlung ("Poly. Sci. USSR", 11, Seite 16318 [1968]) und eine chemische Vernetzung (siehe Tetrahedron, 19, Seiten 1441 bis 1454 [1963]).

Die der Erfindung zugrundeliegende Aufgabe bestand nun darin, ein Verfahren zur Herstellung hydrophiler Membranen unter Verwendung von Polyvinylpyrrolidon als hydrophiles Polymer zu bekommen, die möglichst wenig oder kein Polyvinylpyrrolidon durch Extraktion abgeben und verbesserte Leistung zeigen.

Erfindungsgemäß ist das Verfahren zur Herstellung hydrophiler mikroporöser Membranen unter Verwendung wenigstens eines hydrophoben Polymers und von Polyvinylpyrrolidon als hydrophiles Polymer, membranbildender Formgebung der Polymeren und Immobilisierung des Polyvinylpyrrolidons dadurch gekennzeichnet, daß man das Polyvinylpyrrolidon auf und/oder in der Membran durch Behandlung der Membran mit einer wäßrigen Peroxodisulfatlösung in der Wärme immobilisiert.

In seiner Gesamtheit verläuft das erfindungsgemäße Verfahren gewöhnlich folgendermaßen:Die zu verwendenden hydrophoben und hydrophilen Polymere werden getrocknet und sodann in einem geeigneten Lösungsmittel, wie N-Methylpyrrolidon, aufgelöst. Die Polymerlösung wird filtriert und in üblicher Weise nach dem bekannten Phaseninversionsverfahren zu Hohlfasern gesponnen oder bogenförmigen Membranen gegossen. Wenn in dieser Beschreibung von Membranen die Rede ist, soll dieser Begriff auch Hohlfasermembranen einschließen.

Die Membran wird sodann gegebenenfalls mit Polyvinylpyrrolidon vorbeschichtet und gespült. Es folgt die erfindungsgemäße Immobillsierung durch Behandlung mit einer Peroxydisulfatlösung in der Wärme, wonach erneut gespült wird. Im Falle einer Verwendung von Polyethersulfon oder Polyaramid als hydrophobes Polymer folgt eine Wasserdampfsterilisation, wonach die Membran getrocknet wird und dann zum Einbau in einem Gehäuse fertig ist. Im Falle von Hohlfasen werden diese mit Hilfe von Polyurethan in einem Gehäuse eingegossen.

Die hydrophoben und hydrophilen Polymeren können in den aus dem Stand der Technik bekannten Mengenverhältnissen eingesetzt werden. Zweckmäßig verwendet man 80 bis 99,5 Gew.-% des oder der hydrophoben Polymeren und 0,5 bis 20, vorzugsweise 0,5 bis 10 Gew.-% des oder der hydrophilen Polymeren, von denen eines aus Polyvinylpyrrolidon besteht.

Für die Herstellung der erfindungsgemäßen Membranen können die hydrophoben und hydrophilen Polymeren also im Gemisch verwendet werden. Stattdessen oder zusätzlich kann die Membran aus hydrophobem Polymer oder aus einem Gemisch von hydrophobem und hydrophilem Polymer mit Polyvinylpyrrolidon beschichtet werden.

Die erfindungsgemäß zu verwendenden hydrophoben Polymere sind jene, die auch nach dem Stand der Technik für Membranen verwendet werden, wie vorzugsweise Polysulfon, Polyethersulfon, Polyaramid, Polycarbonat, Polyamid, Polyvinylchlorid, modifizierte Acrylsäure, Polyether, Polyurethan, Polyacrylnitril, Polypropylen, Polyetherimid und Mischpolymere dieser Polymere. Bevorzugte hydrophobe Polymere sind

Polysulfon, Polyethersulfon, Polyaramid und Polyamid.

Ein erfindungsgemäß zwingend verwendetes hydrophiles Polymer ist Polyvinylpyrrolidon. Zusätzlich zu diesem können aber noch weitere, für die Herstellung von Membranen bekannte hydrophile Polymere mitverwendet werden, wie Polyethylenglycol, Polyglycolmonoester, Copolymere von Polyethylenglycol mit Polypropylenglycol, wasserlösliche Cellulosederivate, Polysorbat und Polyethylen-Polypropylenoxidcopolymere.

Das erfindungsgemäß verwendete Polyvinylpyrrolidon besitzt zweckmäßig ein Molekulargewicht (Gewichtsmittelwert) von mindestens 8000 Dalton, wobei die Molekülketten aus sich wiederholenden Struktureinheiten der Formel

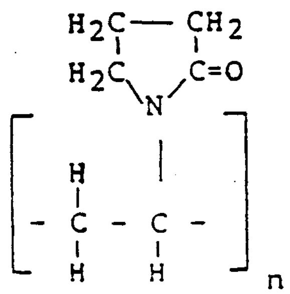

bestehen, in der n größer als 120 ist.

Für die Membranherstellung werden die Polymeren in einem geeigneten Lösungsmittel in Lösung gebracht, wie in Dimethylformamid, N-Methylpyrrolidon oder Dimethylacetamid. N-Methylpyrrolidon ist bevorzugt. Die Ausfällung der Membran erfolgt in einem Ausfällungsbad aus reinem Wasser oder einem Gemisch von Wasser mit N-Methylpyrrolidon oder Dimethylsulfoxid. Die Temperatur des Ausfällungsbades liegt zweckmäßig zwischen 18 und 65 °C. Die erhaltenen Membranen haben gewöhnlich eine Dicke im Bereich von 45 bis 50 µm.

Die Immobilisierung des Polyvinylpyrrolidons zur Verhinderung, daß Anteile desselben beim Spülen und bei der späteren Verwendung extrahiert werden, erfolgt mit einer wäßrigen Lösung wenigstens eines Peroxodisulfates unter Erwärmen. Als Peroxodisulfate werden zweckmäßig $K_2S_2O_8$, $Na_2S_2O_8$ oder $(NH_4)_2S_2O_8$ verwendet. Die Temperatur der Peroxodisulfatlösung während der Behandlung der Membran liegt zweckmäßig im Bereich von 50 bis 100, vorzugweise im Bereich von 60 bis 90 °C. Die Behandlungszeit liegt gewöhnlich im Bereich von 1 bis 30, vorzugsweise im Bereich von 5 bis 20 und besonders in der Größenordnung von 10 min. Für die Behandlung wird eine verdünnte Peroxodisulfatlösung benutzt, zweckmäßig mit einer Konzentration von 0,1 bis 5, vorzugsweise von 1 bis 3 Gew.-%. Die Lösung kann durch Alkalizusatz schwach alkalisch gemacht werden. Zweckmäßig führt man die Peroxodisulfatlösung über bzw. im Falle von Hohlfasern durch die Membranen, und zwar gewöhnlich mit einer Fließgeschwindigkeit von 100 bis 300, vorzugsweise 150 bis 200 ml/min.

Nach dieser Immobilisierungsbehandlung werden die Membranen zweckmäßig mit entionisiertem Wasser gespült und dann mit Luft von 45 °C und mit einem Wassergehalt von weniger als 1 g/m$^3$ bis zur Gewichtskonstanz getrocknet.

Für die Bestimmung der extrahierbaren Polyvinylpyrrolidonanteile wird gewöhnlich folgendes Verfahren angewendet: Die zu untersuchenden Hohlfasern oder Bogenmembranen mit einem Trockengewicht von 0,5 bis 20 g werden in Stücke geschnitten und mit entionisiertem Wasser 16 h bei 60 °C in definiertem Volumen behandelt. In dem Extrakt wird die Polyvinylpyrrolidonkonzentration nach K. Müller (Pharm. Acta. Helv. 43, Seite 107 [1968]) und nach J. Breinlich (Pharm. Ztg. 118 [12], Seite 440 [1973]) gemessen. Die extrahierbare Polyvinylpyrrolidonmenge wird auf das Polyvinylpyrrolidongesamtgewicht des Polymers der Trockenmembran von 20 g umgerechnet.

Die erfindungsgemäß hergestellten Membranen sind besonders als Membranen für medizinische Zwecke geeignet, insbesondere für Hämodialyse, Hämodiafiltration und Hämofiltration von Blut, da sie infolge der wirksamen erfindungsgemäßen Immobilisierung des Polyvinylpyrrolidons nicht nur ihre Leistung im wesentlichen behalten, sondern auch kein Polyvinylpyrrolidon in das Gewebe des Patienten abgeben.

In den folgenden Beispielen wurden die nachfolgend aufgeführten Membraneigenschaften durchwegs bei 37 °C gemessen.

Lp 1: Hydraulische Permeabilität für reines Wasser ($10^{-4}$ cm/s/bar), Meßmethode gemäß "Evaluation of Hemodialysis and Dialysis Membranes", NIH-Veröffentlichung 77/1294 [1977]).

Lp (Alb): Hydraulische Permeabilität für eine 6 %ige Albuminlösung ($10^{-4}$ cm/s/bar), Meßmethode nach "Evaluation of Hemodialysis and Dialysis Membranes", NIH-Veröffentlichung 77-1294 (1977).

Lp 2: Hydraulische Permeabilität für reines Wasser nach der Lp-(Alb)-Messung ($10^{-4}$ cm/s/bar), Meßmethode nach "Evaluation of Hemodialysis and Dialysis Membranes", NIH-Veröffentlichung 77-1294 (1977).

P (Cl): Diffusive Permeabilität für eine 0,9 %ige NaCl-Lösung (cm/s x $10^{-4}$), Meßmethode nach "Evaluation of Hemodialysis and Dialysis Membranes", NIH-Veröffentlichung 77-1294 (1977).

SK (Myo): Siebkoeffizient für eine 0,002 %ige Myoglobinlösung nach 15 min (%), Meßmethode nach DIN 58 353, Teil 2 C 3, 1988.

Sk (Alb): Siebkoeffizient einer 6 %igen Albuminlösung nach 15 min (%), Meßmethode nach DIN 58 353, Teil 2 C 3, 1988.

## Beispiele

### Beispiel 1

| **Bogenmembranen aus einer Spinnlösung mit 14 % Polyethersulfon und 4 % Polyvinylpyrrollidon (PVP) in N-Methylpyrrolidon, ausgefällt in reinem Wasser bei 18 °C** | | | |
|---|---|---|---|
| **Membrantype** | **Extrahierbares PVP (mg/Filter)** | **Lp 1** | **P (Cl)** |
| unbehandelt | 320 | 7 | 10,9 |
| erfindungsgemäß behandelt | <2 | 10 | 11,3 |

### Beispiel 2

| **Bogenmembranen aus einer Spinnlösung mit 11 % Polyamid und 3 % PVP in N-Methylpyrrolidon, ausgefällt in reinem Wasser bei 18 °C** | | | |
|---|---|---|---|
| **Membrantype** | **Extrahierbares PVP (mg/Filter)** | **Lp 1** | **P (Cl)** |
| unbehandelt | 104 | 4 | 4,2 |
| erfindungsgemäß behandelt | 6 | 120 | 4,5 |

Beispiel 3

| **Bogenmembranen aus einer Spinnlösung mit 11 % Polyaramid, 3 % PVP und 1 bis 4 % $CaCl_2$ In N-Methylpyrrolidon, ausgefällt in einem Gemisch von 70 % Wasser und 30 % N-Methylpyrrolidon bei 65 °C** | | | |
|---|---|---|---|
| **Membrantype** | **Extrahiertes PVP (mg/Filter)** | **Lp 1** | **P (Cl)** |
| unbehandelt | 35 | 15 | 10,3 |
| erfindungsgemäß behandelt | 2 | 15 | 13,3 |

**Beispiel 4**

| Hohlfasermembranbündel mit 100 Fasern aus einer Spinnlösung mit 14 % Polyethersulfon und 11 % PVP in N-Methylpyrrolidon, ausgefällt mit einem mittig durchfließenden Fällbad aus 50 % Wasser, 25 % Dimethylsulfoxid und 25 % N-Methylpyrrolidon bei 60 °C | | | | | | | |
|---|---|---|---|---|---|---|---|
| **Membran type** | **LP 1 ($H_2O$)** | **Lp (Alb) ($10^{-4}$ cm/s/bar)** | **Lp 2 ($H_2O$)** | **P (Cl) ($10^{-4}$ cms)** | **SK (Myo) 15 min (%)** | **SK (Alb) (%)** | **extrahiertes PVP (mg/Filter)** |
| unbehandelt | 120 | 4,5 | 67 | 13,6 | 73 | 2,2 | 30 - 50 |
| erfindungsgemäß behandelt | 290 | 5,4 | 99 | 15,1 | 93 | 8,2 | <1 |

Tabelle 5

**Hohifasermembranbündel von 100 Fasern aus einer Spinnlösung mit 12 % Polyethersulfon und 6 % PVP in N-Methylpyrrolidon, ausgefällt mit einem Fällbad aus 70 % Wasser und 30 % N-Methylpyrrolidon bei 60 °C**

| Membran type | LP 1 ($H_2O$) | Lp (Alb) ($10^{-4}$ cm/s/bar) | Lp 2 ($H_2O$) | P (Cl) ($10^{-4}$ cms) | SK (Myo) 15 min (%) | SK (Alb) (%) | extrahiertes PVP (mg/Filter) |
|---|---|---|---|---|---|---|---|
| unbehandelt | 20 | 4,9 | 21 | 16,5 | 26 | 0,4 | 30 - 50 |
| erfindungsgemäß behandelt | 32 | 4,3 | 21 | 13,5 | 94 | 1,3 | <1 |

**Beispiel 6**

| Hohlfasermembranbündel mit 100 Fasern aus einer Spinnlösung mit 14 % Polyethersulfon und 5 % PVP in N-Methylpyrrolidon, ausgefällt mit einem Fällbad aus 55 % Wasser und 45 % N-Methylpyrrolidon bei 60 °C | | | | | | | |
|---|---|---|---|---|---|---|---|
| **Membran type** | **LP 1 ($H_2O$)** | **Lp (Alb) ($10^{-4}$ cm/s/bar)** | **Lp 2 ($H_2O$)** | **P (Cl) ($10^{-4}$ cms)** | **SK (Myo) 15 min (%)** | **SK (Alb) (%)** | **extrahiertes PVP (mg/Filter)** |
| unbehandelt | 120 | 4,5 | 64 | 15,1 | 84 | 1,3 | 31 |
| erfindungsgemäß behandelt | 420 | 5,8 | 90 | 13,0 | 95 | 6,6 | <1 |

**Beispiel 7**

| Bogenmembranen aus einer Spinnlösung mit 14 % Polyethersulfon und 7 % PVP in N-Methylpyrrolidon, ausgefällt in einem Fällbad aus 70 % Wasser und 30 % N-Methylpyrrolidon bei 65 °C | | | |
|---|---|---|---|
| **Membrantype** | **Extrahiertes PVP (mg/Filter)** | **Lp 1** | **P (Cl)** |
| Ohne PVP-Vorbeschichtung erfindungsgemäß immobilisiert | <1 | 110 | 10,1 |
| Mit einer Vorbeschichtung aus einer 5 %igen PVP-Lösung erfindungsgemäß immobilisiert | <1 | 10 | 15,3 |

**Beispiel 8**

| Bogenmembranen aus einer Spinnlösung mit 14 % Polyethersulfon und 4 % PVP in N-Methylpyrrolidon, ausgefällt mit einem Fällbad aus 70 % Wasser und 30 % N-Methylpyrrolidon bei 65 °C | | | |
|---|---|---|---|
| **Membrantype** | **Lp 1** | **P (Cl)** | **Extrahiertes PVP (mg/Filter)** |
| erfindungsgemäß ohne PVP-Vorschichtung immobilisiert | 20 | 12,0 | <1 |
| Nach Vorbeschichtung mit einer 2 %igen PVP-Lösung erfindungsgemäß immobilisiert | 11 | 11,4 | 5 - 15 |
| Nach einer Vorbeschichtung mit einer 5 %igen PVP-Lösung erfindungsgemäß immobilisiert | 1 | 11,3 | 5 - 15 |

## Patentansprüche

1. Verfahren zur Herstellung hydrophiler Membranen unter Verwendung wenigstens eines hydrophoben Polymers und von Polyvinylpyrrolidon als hydrophiles Polymer, membranbildender Formgebung der Polymeren und Immobilisierung des Polyvinylpyrrolidons, **dadurch gekennzeichnet**, daß man das Polyvinylpyrrolidon auf und/oder in der Membran durch Behandlung mit einer wäßrigen Peroxodisulfatlösung in der Wärme immobilisiert.

2. Verfahren nach Anspruch 1, **dadurch gekennzeichnet**, daß man die hydrophoben und hydrophilen Polymere im Gemisch miteinander zur Membrangewinnung verwendet.

3. Verfahren nach Anspruch 1 oder 2, **dadurch gekennzeichnet**, daß man die Membran vor der Immobilisierung mit Polyvinylpyrrolidon beschichtet.

4. Verfahren nach einem der Ansprüche 1 bis 3, **dadurch gekennzeichnet**, daß man die immobilisierung des Polyvinylpyrrolidons bei elner Temperatur von 50 bis 100, vorzugsweise bei 60 bis 750 °C durchführt.

5. Verfahren nach einem der Ansprüche 1 bis 4, **dadurch gekennzeichnet**, daß man die Membran mit der Peroxodisulfatlösung während 1 bis 30, vorzugsweise 5 bis 20, insbesondere etwa 10 min behandelt.

6. Verfahren nach einem der Ansprüche 1 bis 5, **dadurch gekennzeichnet**, daß man eine Peroxodisulfatlösung mit einer Peroxodisulfatkonzentration von 0,1 bis 5, vorzugsweise 1 bis 3 Gew.-% verwendet.

7. Verfahren nach einem der Ansprüche 1 bis 6, **dadurch gekennzeichnet**, daß man die Peroxodisulfatlösung über die Membran mit einer Fließgeschwindigkeit von 100 bis 300, vorzugsweise 150 bis 200 ml/min fließen läßt.

8. Verfahren nach einem der Ansprüche 1 bis 7, **dadurch gekennzeichnet**, daß man eine Peroxodisulfatlösung verwendet, deren Peroxodisulfat $Na_2S_2O_8$, $K_2S_2O_8$ und/oder $(NH_4)_2S_2O_8$ ist.

9. Verfahren nach einem der Ansprüche 1 bis 8, **dadurch gekennzeichnet**, daß man eine schwach alkalische Peroxodisulfatlösung verwendet.

10. Verfahren nach einem der Ansprüche 1 bis 9, **dadurch gekennzeichnet**, daß man die Membran nach der Immobilisierung des Polyvinylpyrrolidons mit entionisiertem Wasser spült.

11. Verwendung einer nach einem der Ansprüche 1 bis 10 hergestellten Hohlfaser- oder Bogenmembran für die Hämodialyse, Hämodiafiltration oder Hämofiltration von Blut.

Europäisches Patentamt

# EUROPÄISCHER RECHERCHENBERICHT

Nummer der Anmeldung
EP 94 10 1003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X,P | EP-A-0 571 871 (SEITZ-FILTER-WERKE)<br>* das ganze Dokument * | 1-11 | B01D67/00 |
| X | DATABASE WPI<br>Week 9248,<br>Derwent Publications Ltd., London, GB;<br>AN 92-394433<br>& JP-A-4 293 528 (KURARAY CO LTD) 19. Oktober 1992<br>* Zusammenfassung * | 1 | |
| X | PATENT ABSTRACTS OF JAPAN<br>vol. 11, no. 222 (C-435) (2669) 18. Juli 1987<br>& JP-A-62 038 205 (DAICEL CHEM IND LTD) 19. Februar 1987<br>* Zusammenfassung * | 1 | |
| A | DE-A-40 07 383 (SEITZ-FILTER-WERKE)<br>* Ansprüche * | 1 | |

RECHERCHIERTE SACHGEBIETE (Int.Cl.5)

B01D

Der vorliegende Recherchenbericht wurde für alle Patentansprüche erstellt

| Recherchenort | Abschlußdatum der Recherche | Prüfer |
|---|---|---|
| BERLIN | 7. Juni 1994 | Cordero Alvarez, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)